# EUROPEAN PATENT APPLICATION

(11) **EP 3 789 138 A1**
(43) Date of publication of application: **10.03.2021**
(21) Application number: 20793545.3
(22) Date of filing: 15.07.2020
(51) Int. Cl.: B22F 9/24, B22F 1/02

(54) **METHOD FOR PREPARING SILVER-COPPER MIXED POWDER HAVING CORE-SHELL STRUCTURE BY USING WET PROCESS**

(30) Priority: 15.07.2019 KR 20190084840
(71) Applicant: Powerpack Co., Ltd, Haman-gun, Gyeongsangnam-do 52012 (KR)
(72) Inventor: The designation of the inventor has not yet been filed
(74) Representative: Gulde & Partner
(86) International application number: PCT/KR2020/009303
(87) International publication number: WO 2021/010741

(57) **Abstract**

The present invention relates to a method for preparing silver-copper mixed powder having a core-shell structure using a wet process, and more specifically, to a method for preparing silver-copper mixed powder having a core-shell structure using a wet process, which does not require a reaction post-treatment step and a neutralization step of requiring proper pH control without using a basic solvent and which is easily applied to mass production.

## Description

### [Technical Field]

The present invention relates to a method for preparing silver-copper mixed powder having a core-shell structure using a wet process, and more specifically, to a method for preparing silver-copper mixed powder having a core-shell structure using a wet process, which does not require a reaction post-treatment step and a neutralization step of requiring proper pH control without using a basic solvent and which is easily applied to mass production.

### [Background Art]

Silver powder has been widely used in high-tech industries as a raw material for conductive inks, pastes, and adhesives for electronic materials. Recently, as the spread of electronic devices employing high-density integrated circuits, which are making a lot of development in the material development trends, is rapidly increasing, electronic circuit devices have been miniaturized, highly functionalized, diversified and refined in order to improve processing capability, and furthermore, high-precision shielding materials are required to prevent interference of electromagnetic waves. Accordingly, silver powder has been necessarily used in manufacturing electric devices or electronic parts, including high-functional conductive pastes, conductive inks, and electrical material adhesives.

Electrolysis, chemical methods (reduction method), and the like are known as a method of uniformly dispersing silver particles widely used as sterilizing and antibacterial metals in a liquid phase, and most of the particles prepared by electrolysis are prepared in the form of silver colloids, and thus, there is a disadvantage that the silver powder is not prepared at a high concentration.

In addition, a liquid phase reduction method is widely known as a method that facilitates the shape control of powder and makes it easy to prepare ultrafine powder in submicron units. As advantages of the liquid phase reduction method, the shape control is relatively easy to have high sphericity and a uniform particle size distribution, and it is possible not only to prepare ultrafine powder of sub-microns, but also to prepare powder having high tap density, which is one of the most important properties as raw material powder for electromagnetic shielding due to its excellent powder surface condition, but it is required to optimize a concentration, a temperature, an appropriate pH, and a reaction rate. However, in the liquid phase reduction method, in order to minimize impurities, several filtration and washing processes are included to lengthen the process, and as a result, there is a problem in that the aggregation of the resulting silver powder becomes severe and a large amount of loss of powder occurs. In addition, when the silver powder is exposed to air during drying for powder recovery, there is a problem in that many oxides are formed on the surface of the powder by reacting with oxygen.

In addition, copper nanopowder has already been used as conductive paste in the electronics industry, and recently, as the copper nanopowder has been widely used as a conductive ink material, interest in mass production technology development of high-purity copper (Cu) nanopowder is high.

As a currently used technology for preparing copper nanoparticles, there is a chemical reduction method that prepares metal nanoparticles from a copper metal ion or an organic metal compound by using a hydride (NaBH₄, N₂H₄, ...) compound as a reducing agent in a liquid phase containing a dispersant. In addition, a method of mechanically pulverizing metal to make fine particles, a spray method that synthesizes particles by spraying in a gas phase, an electrolysis method, and the like are used.

However, in the above chemical reduction method, copper nanoparticles are prepared through a separate separation process, but the compound used as a reducing agent and the dispersant are not completely removed, but remain in the form of surrounding the copper nanoparticles, and are easily oxidized in the air to be hardly mass-produced. Due to this disadvantage, there is a limitation in mass production due to the complicated process. Accordingly, in order to compensate for the above-described problems, the present inventors recognized that it was urgent to develop a method for preparing silver-copper mixed powder having a core-shell structure, and thus, completed the present invention.

### [Disclosure]

### [Technical Problem]

An object of the present invention is to provide a method for preparing silver-copper mixed powder having a core-shell structure that does not require a reaction post-treatment step and a neutralization step of requiring proper pH control without using a basic solvent and which is easily applied to mass production.

Another object of the present invention is to provide a method for preparing silver-copper mixed powder having a core-shell structure with a uniform particle size distribution and remarkably improved electrical resistance.

Yet another object of the present invention is to provide a method for preparing silver-copper mixed powder having a core-shell structure exhibiting excellent stability in air due to plasma post-treatment and having a high purity of 99% or more.

The objects of the present invention are not limited to the above-mentioned objects, and other objects not mentioned will be clearly understood by those skilled in the art from the following description.

### [Technical Solution]

In order to achieve the objects, the present invention provides a method for preparing silver-copper mixed powder having a core-shell structure using a wet process.

Hereinafter, this specification will be described in more detail.

The present invention provides a method for preparing silver-copper mixed powder having a core-shell structure comprising the following steps:
(S1) dissolving silver (Ag) and copper (Cu) in an aqueous nitric acid solution;
(S2) adding a reducing agent to the solution; and
(S3) preparing silver-copper mixed powder having a core-shell structure by performing plasma post-treatment, after performing step (S2).

The present invention may further comprise adjusting particle sizes of the silver-copper mixed powder by stirring while heating at 100°C to 500°C, after performing step (S1).

In the present invention, the reducing agent used in step (S2) may be ascorbic acid (C₆H₈O₆), hydroquinone (C₆H₄(OH)₂), sodium borohydride (NaBH₄), formaldehyde (HCHO), ethylene glycol (C₂H₄(OH)₂), glycerin (C₃H_{g}O₃), or a mixture thereof.

In the present invention, the plasma post-treatment conditions used in step (S3) are as the same as the following [Table 1].

**[Table 1]**

| | |
|---|---|
| Initial vacuum | 4.0 x 10⁻⁶ to 4.0 x 10⁻⁵ Torr |
| Plasma process vacuum | 0.5 to 0.8 mTorr |
| Carrier gas | Argon (Ar₂), Nitrogen (N₂), or mixed gas |
| | (Ar₂/N₂) thereof |
| Plasma process time | 15 to 60 minutes |
| Plasma process stage temperature | 100 to 200 °C |
| Plasma process temperature | 5,000 to 11,000 °C |

In the present invention, the silver-copper mixed powder prepared by the preparation method may have an electrical resistance value of 45 to 55 KΩ.

### [Advantageous Effects]

The method for preparing the silver-copper mixed powder having the core-shell structure of the present invention does not require a reaction post-treatment step and a neutralization step of requiring proper pH adjustment without using a basic solvent, and can control the particle sizes according to a temperature to be easily applied to mass production.

In addition, according to the method for preparing the silver-copper mixed powder having the core-shell structure of the present invention, it is possible to prepare nanopowder having a uniform particle size distribution and high purity of 99.9% or more, and have a remarkably improved electrical resistance value.

Further, according to the method for preparing the silver-copper mixed powder having the core-shell structure of the present invention, it is possible to exhibit excellent stability in air due to plasma post-treatment, and to prepare silver-copper mixed powder having high purity of 99% or more.

The effects of the present invention are not limited to the aforementioned effect, and other effects, which are not mentioned above, will be clearly understood to those skilled in the art from the description of the claims.

### [Description of Drawings]

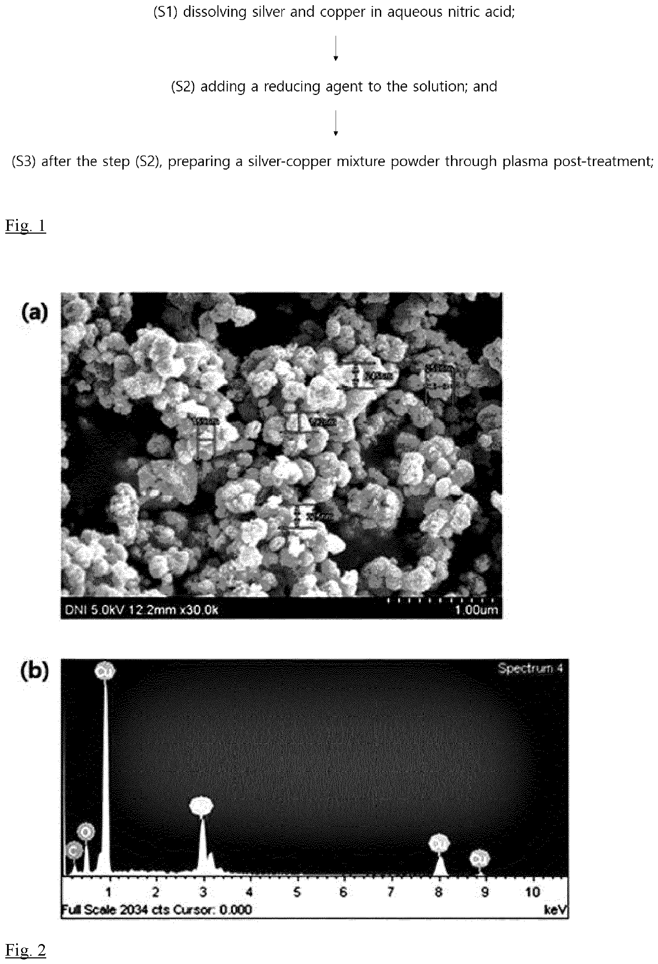

FIG. 1 is a block diagram schematically illustrating a method for preparing silver-copper mixed powder having a core-shell structure of the present invention.
FIG. 2 illustrates (a) an SEM image and (b) EDS data of silver-copper mixed powder prepared according to Example 1.
FIG. 3 is an energy dispersive X-ray spectroscopy (EDS) mapping image of the silver-copper mixed powder prepared in Example 1.
FIG. 4 is an X-ray diffraction pattern of the silver-copper mixed powder prepared in Example 1.
FIG. 5 is a photograph showing the electrical resistances of silver-copper mixture powders prepared according to (a) Comparative Example 1, (b) Comparative Example 2 and (c) Example 1.

### [Best Mode of the Invention]

Terms used in the present invention adopt general terms which are currently widely used as possible by considering functions in the present invention, but the terms may be changed depending on an intention of those skilled in the art, a precedent, emergence of new technology, etc. Further, in a specific case, a term arbitrarily selected by an applicant is present and in this case, a meaning of the term will be disclosed in detail in a corresponding description part of the invention. Accordingly, the term used in the present invention should be defined based on not just a name of the term but a meaning of the term and contents throughout the present invention.

Unless contrarily defined, all terms used herein including technological or scientific terms have the same meanings as those generally understood by those skilled in the art. Terms which are defined in a generally used dictionary should be interpreted to have the same meaning as the meaning in the context of the related art, and are not interpreted as an ideal meaning or excessively formal meanings unless clearly defined in the present application.

The numerical range includes numerical values defined in the above range. All maximum numerical limits given throughout this specification include all lower numerical limits as if the lower numerical limits are clearly written. All minimum numerical limits given throughout this specification include all higher numerical limits as if the higher numerical limits are clearly written. All numerical limits given throughout this specification will include all better numerical ranges within a wider numerical range, as if narrower numerical limits are clearly written. Hereinafter, Examples of the present invention will be described in detail, but it is obvious that the present invention is not limited by the following Examples.

The present invention provides a method for preparing silver-copper mixed powder having a core-shell structure comprising the following steps:
(S1) dissolving silver (Ag) and copper (Cu) in an aqueous nitric acid solution;
(S2) adding a reducing agent to the solution; and
(S3) preparing silver-copper mixed powder having a core-shell structure by performing plasma post-treatment, after performing step (S2).

In the present invention, step (S1) is a step of dissolving silver (Ag) and copper (Cu) in an aqueous nitric acid solution.

The silver (Ag) may be silver powder, silver granule, or silver paste, more preferably silver granule, but is not limited thereto unless there is a special problem in preparing the silver-copper mixed powder.

The copper (Cu) may be copper powder, copper granule, or copper paste, more preferably silver granule, but is not limited thereto unless there is a special problem in preparing the silver-copper mixed powder.

In step (S1), the silver may be added and dissolved in an amount of 10 wt% to 30 wt% to the aqueous nitric acid solution. For example, when the amount of the solution in which silver is dissolved in the aqueous nitric acid solution is 100 g, 10 to 30 g of the silver (Ag) may be dissolved and present.

In step (S1), the copper may be added and dissolved in an amount of 70 wt% to 90 wt% to the aqueous nitric acid solution. For example, when the amount of the solution in which silver is dissolved in the aqueous nitric acid solution is 100 g, 70 to 90 g of the copper (Cu) may be dissolved and present.

The term "wt%" used in the present invention means that a weight ratio of a solute dissolved in the solution is expressed in percentage (%).

Step (S1) may further comprise adjusting particle sizes of the silver-copper mixed powder by stirring while heating at 100 to 300°C when the silver and the copper are dissolved in the aqueous nitric acid solution.

More specifically, in step (S1), the silver-copper mixed powder having a diameter of 100 to 300 nm may be prepared by stirring while heating at 100 to 500°C when the silver and the copper are dissolved in the aqueous nitric acid solution.

Through the heating process, the particle sizes of the silver-copper mixed powder may be adjusted without performing an additional chemical process, and the silver-copper mixed powder can be prepared in uniform sizes to be easily applied to mass industries.

In the present invention, step (S2) is a step of adding a reducing agent to the solution.

The reducing agent used in step (S2) is ascorbic acid, hydroquinone, sodium fluoride hydride, formaldehyde, ethylene glycol, glycerin or a mixture thereof, more preferably sodium fluoride hydride, formaldehyde or a mixture thereof, and more preferably ascorbic acid, hydroquinone or a mixture thereof.

The reducing agent may be added in an amount of 10 wt% to 50 wt%, more preferably in an amount of 10 wt% to 35 wt% with respect to 100 wt% of the solution prepared in step (S1).

In step (S2), the silver-copper mixed powder is reduced and precipitated as a precipitate by adding the reducing agent to the solution prepared in step (S1) step.

In addition, step (S2) may further include a step of stirring while heating when the reducing agent is added.

A step in which the precipitate produced by adding the reducing agent in step (S2) is filtered, washed with pure water, and dried for a predetermined time may be additionally included.

The filtering is to separate the precipitate by using centrifugation, and the precipitated silver-copper mixed powder may be obtained through a filter paper, or the silver-copper mixture may be obtained through a spray dry process.

The spray drying process may be performed by dispersing a solution to which the reducing agent is added in a temperature range of 100 to 300°C to collect (extract) the silver-copper mixed powder.

The obtained silver-copper mixed powder may be washed with pure water to wash the reducing agent, foreign matters, etc., while may adhere to the surface of the silver-copper mixed powder.

The term "pure water" used in the present invention refers to distilled water from which impurities are removed by sterilization, and when the pure water is applied to the present invention, the pure water refers to pure water, which is distilled water having 95% or more of high purity.

The drying may be performed at room temperature and may be performed for 12 to 72 hours, and any temperature and time at which the solvent, pure water, etc. smeared on the surface of the silver-copper mixed powder obtained as the precipitate are dried are not limited thereto.

In the present invention, step (S3) is a step of preparing the silver-copper mixed powder having the core-shell structure by performing plasma post-treatment, after performing step (S2).

The plasma post-treatment process used in the present invention is a material processing technology using plasma that proceeds in a vacuum atmosphere caused by electric-electron energy, and is a process method having an advantage of not requiring a separate cooling device by self-quenching the material itself while applying high energy to surface particles of the material by applying a high temperature. The plasma post-treatment process may prevent oxidation of material particles and modify fine particles using heat-electron energy.

Conditions for the plasma post-treatment are shown in Table 1 below.

**[Table 1]**

| | |
|---|---|
| Initial vacuum | 4.0 x 10⁻⁶ to 4.0 x 10⁻⁵ Torr |
| Plasma process vacuum | 0.5 to 0.8 mTorr |
| Carrier gas | Argon (Ar₂), Nitrogen (N₂), or mixed gas (Ar₂/N₂) thereof |
| Plasma process time | 15 to 60 minutes |
| Plasma process stage temperature | 100 to 200°C |
| Plasma process temperature | 5,000 to 11,000°C |

More specifically, as the plasma post-treatment condition, the initial vacuum may be 4.0 × 10⁻⁶ to 4.0 × 10⁻⁵ Torr, which may be expressed as 5.33 × 10⁻⁴ to 5.33 × 10⁻³ Pa. In addition, as the plasma post-treatment condition, the vacuum during the plasma process may be 0.5 to 0.8 mTorr, which may be expressed as 0.06 to 0.11 Pa.

As the plasma post-treatment condition, the carrier gas may be inert gas such as hydrogen (H₂), nitrogen (N₂), or mixed gas thereof (H₂/N₂), preferably mixed gas of hydrogen and nitrogen, most Preferably gas obtained by mixing the hydrogen and the nitrogen at a flow rate of 9:1.

As the plasma post-treatment condition, the plasma process time may be 10 to 60 minutes, the plasma process stage temperature may be 100 to 200°C, and the plasma process temperature may be 5,000 to 11,000°C.

The plasma process stage temperature means a temperature at the beginning of the process, and the plasma process temperature means a temperature at which the plasma process is substantially performed.

The plasma process may be performed by generating RF plasma under the plasma post-treatment condition. The RF plasma may be generated by a plasma generator that outputs a capacity of 200 to 600 W.

In addition, the core-shell structure may have a shape in which the copper forms a core of the mixed powder and the silver forms a shell surrounding the surface of the copper.

In the silver-copper mixed powder, since the silver surrounds the copper with the shell, an electrical resistance value may be improved, and an excellent shielding effect may be expected.

Advantages and features of the present invention, and methods for accomplishing the same will be more clearly understood from Examples to be described below in detail. However, the present invention is not limited to Examples set forth below, and may be embodied in various different forms. Examples are just for rendering the disclosure of the present invention complete and are set forth to provide a complete understanding of the scope of the present invention to a person with ordinary skill in the technical field to which the present invention pertains, and the present invention will only be defined by the scope of the appended claims.

Reagents and solvents to be mentioned below were purchased from Sigma Aldrich Korea unless otherwise specified.

### Example 1. Preparation of silver-copper mixed powder having core-shell structure

Silver granules and copper granules were added to and dissolved in an aqueous nitric acid solution to prepare a silver-nitric acid solution, and at this time, silver and copper were prepared to be 30 wt% and 70 wt%, respectively. The silver-copper nitric acid solution was heated to 265°C for 3 hours and added with ascorbic acid (C₆H₈O₆) as a reducing agent to obtain a silver-copper mixed precipitate. The mixed precipitate was filtered using centrifugation, and the filtered silver-copper mixed powder was washed with pure water, and dried at room temperature for 36 hours. Finally, plasma post-treatment was performed under the conditions of [Table 2] below to prepare a silver-copper mixed powder having a core-shell structure.

**[Table 2]**

| | |
|---|---|
| Initial vacuum | 4.0 x 10⁻⁶ to 4.0 x 10⁻⁵ Torr |
| Plasma process vacuum | 0.5 to 0.8 mTorr |
| Carrier gas | Argon (Ar₂), Nitrogen (N₂), or mixed gas |
| | (Ar₂/N₂) thereof |
| Plasma process time | 15 to 60 minutes |
| Plasma process stage temperature | 100 to 200 °C |
| Plasma process temperature | 5,000 to 11,000 °C |

### Experimental Example 1. Confirmation of EDS mapping

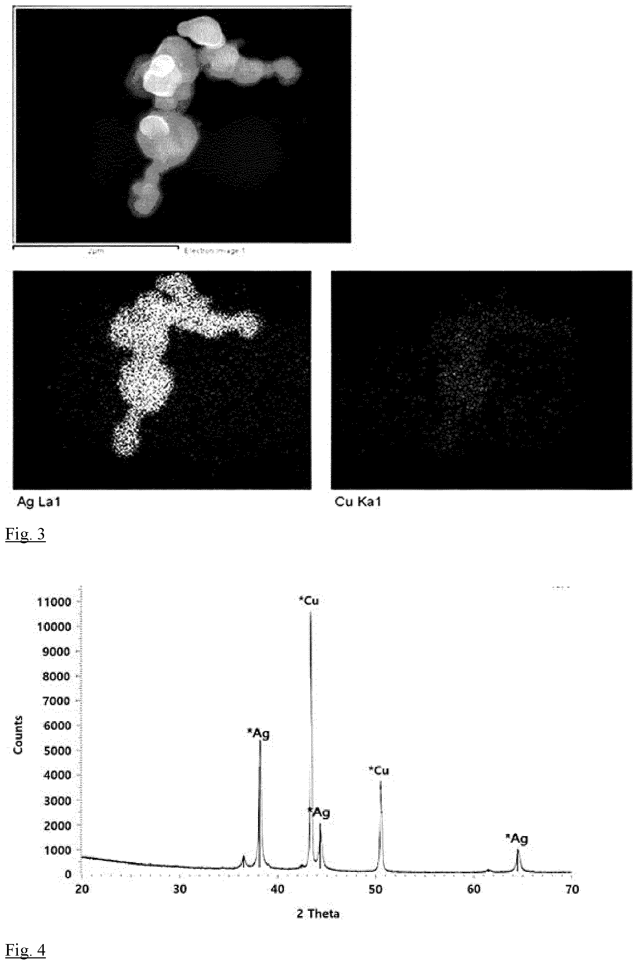

Energy Dispersive X-ray Spectroscopy (EDS) was measured to confirm the core-shell structure of the silver-copper mixed powder of Example 1 prepared by the preparation method of the present invention, and the results were shown in FIG. 3.

Referring to FIG. 3, it can be confirmed that the copper forming the core constitutes the center of the silver-copper mixed powder, and the silver forming the shell constitutes the edge of the silver-copper mixed powder, and it can be confirmed that the silver-copper mixed powder has a core-shell structure.

### Experimental Example 2. Confirmation of X-ray diffraction pattern

In order to confirm the silver-copper mixed powder of Example 1 prepared by the preparation method of the present invention, an X-ray diffraction pattern (XRD pattern) was confirmed, and the results were shown in FIG. 4.

Referring to FIG. 4, it can be confirmed that the silver-copper mixed powder prepared by Example 1 has excellent crystallinity and is prepared with high purity without impurities.

From the results, the high-purity silver-copper mixed powder prepared by the preparation method of the present invention may be variously applied in food and pharmaceutical fields without containing impurities.

### Experimental Example 3. Confirmation of electrical reference

The following experiment was performed to confirm an electrical resistance effect of the silver-copper mixed powder prepared by the preparation method of the present invention. The experiment was performed using the silver-copper mixed powder prepared in Example 1 and silver-copper mixed powders described in the following related arts as Comparative Examples.

### Comparative Example 1 - Korean Patent Registration No. 10-1307238

### Comparative Example 2 - Korean Patent Registration No. 10-1078253

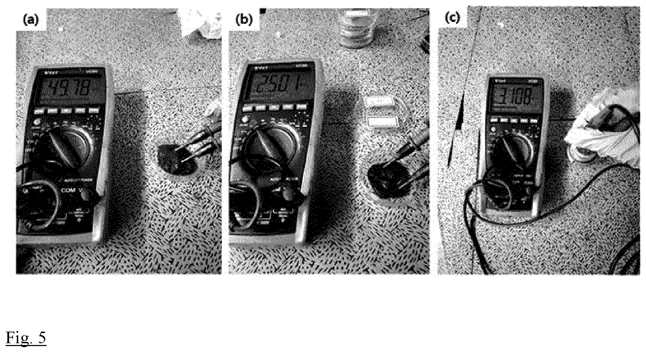

The silver-copper mixed powders of (a) Example 1, (b) Comparative Examples 1 and (c) Comparative Example 2 were prepared and then prepared to paste. 9 g of the prepared paste was weighed to measure electrical resistance, and the results were shown in FIG. 5 and [Table 3] below.

**[Table 3]**

| | Example 1 | Comparative Examples 1 | Comparative Examples 2 |
|---|---|---|---|
| Electrical resistance | 49.78 KΩ | 2.50 KΩ | 3.11 KΩ |

Referring to FIG. 5 and [Table 3], it can be confirmed that the silver-copper mixed powder of Example 1 prepared by the preparation method of the present invention has a significantly improved electrical resistance value compared to the silver-copper mixed powders of Comparative Examples 1 and 2.

It will be appreciated by those skilled in the art that the present invention as described above may be implemented into other specific forms without changing the technical spirit thereof or essential characteristics. Thus, it is to be appreciated that embodiments described above are intended to be illustrative in all aspects, and not restrictive.

## Claims

1. A method for preparing silver-copper mixed powder having a core-shell structure comprising:
(S1) dissolving silver (Ag) and copper (Cu) in an aqueous nitric acid solution;
(S2) adding a reducing agent to the solution; and
(S3) preparing silver-copper mixed powder having a core-shell structure by performing plasma post-treatment, after performing step (S2).

2. The method for preparing the silver-copper mixed powder having the core-shell structure of claim 1, further comprising:
adjusting particle sizes of the silver-copper mixed powder by stirring while heating at 100°C to 500°C, after performing step (S1).

3. The method for preparing the silver-copper mixed powder having the core-shell structure of claim 1, wherein the reducing agent used in step (S2) is ascorbic acid (C₆H₈O₆), hydroquinone (C₆H₄(OH)₂), sodium borohydride (NaBH₄), formaldehyde (HCHO), ethylene glycol (C₂H₄(OH)₂), glycerin (C₃H₈O₃), or a mixture thereof.

4. The method for preparing the silver-copper mixed powder having the core-shell structure of claim 1, wherein plasma post-treatment conditions used in step (S3) are shown in [Table 1] below.
**[Table 1]**
| | |
|---|---|
| Initial vacuum | 4.0 x 10⁻⁶ to 4.0 x 10⁻⁵ Torr |
| Plasma process vacuum | 0.5 to 0.8 mTorr |
| Carrier gas | Argon (Ar₂), Nitrogen (N₂), or mixed gas (Ar₂/N₂) thereof |
| Plasma process time | 15 to 60 minutes |
| Plasma process stage temperature | 100 to 200 °C |
| Plasma process temperature | 5,000 to 11,000 °C |

5. The method for preparing the silver-copper mixed powder having the core-shell structure of claim 1, wherein the silver-copper mixed powder prepared by the preparation method has an electrical resistance value of 45 to 55 KΩ.
